# EUROPÄISCHE PATENTSCHRIFT

(11) **EP 2 098 440 B1**
(45) Veröffentlichungstag und Bekanntmachung des Hinweises auf die Patenterteilung: **27.04.2016**
(21) Anmeldenummer: 09002232.8
(22) Anmeldetag: 18.02.2009
(51) Int. Cl.: B62D 15/02, B62D 7/15, B62D 6/00

(54) **Kraftfahrzeug**
Automotive vehicle
Véhicule automobile

(30) Priorität: 05.03.2008 DE 102008012685
(43) Veröffentlichungstag der Anmeldung: 09.09.2009
(73) Patentinhaber: Audi AG, 85045 Ingolstadt (DE)
(72) Erfinder: Meitinger, Karl-Heinz, 83308 Trostberg (DE); Schindlmaister, Roman, 85122 Hitzhofen (DE)
(74) Vertreter: Thielmann, Frank

(56) Entgegenhaltungen:
- WO-A1-2006/118080
- JP-A- 2007 062 623

## Beschreibung

Die Erfindung betrifft ein Kraftfahrzeug mit über eine Stelleinrichtung unabhängig von den Vorderrädern lenkbaren Hinderrädern.

Solche Kraftfahrzeuge mit separat lenkbaren Hinterrädern, deren Lenkwinkel üblicherweise proportional zu dem der Vorderräder eingestellt wird, sind bekannt. Bei diesen Fahrzeugen ist es möglich, aktiv den Fahrweg des Fahrzeugs durch gezielte Verstellung der Hinterräder zu beeinflussen, unter anderem, um dabei den Wendekreis zu optimieren. Wird im Falle einer Wende der Lenkwinkel der Hinterräder entgegen dem der Vorderräder eingestellt, ist es möglich, den äußeren Wendekreis des Fahrzeugs zu reduzieren und den inneren Wendekreis zu erhöhen. Für den Fahrer jedoch ist durch das Einschlagen der Hinterräder das Verhalten und der Raumbedarf des Fahrzeugs relativ schwer einzuschätzen, da das Heck des Fahrzeugs ausscheren kann und so die Gefahr besteht, dass das Fahrzeug des Hecks beispielsweise beim Ausparken aus einer Parkposition benachbart zu einer Wand mit der Wand kollidieren kann. Auch kann es während des Einpark- oder Rangiervorgangs zu einer Kollision mit seitlich neben dem Fahrzeug befindlichen Gegenständen kommen, da sich durch die aktive Hinterradlenkung das Fahrverhalten verglichen mit dem gewohnten Fahrverhalten bei starrer Hinterachse ungewohnt ändern kann. Als Stand der Technik ist das Dokument JP 2007 062 623 A bekannt.

Der Erfindung liegt damit das Problem zugrunde, ein Kraftfahrzeug anzugeben, das unter Ausnutzung der sonstigen Vorteile einer Hinterachslenkung dem Fahrer das Parken bzw. Rangieren erleichtert.

Zur Lösung dieses Problems ist bei einem Kraftfahrzeug der eingangs genannten Art erfindungsgemäß vorgesehen, dass eine Einrichtung zur Erfassung zumindest des seitlichen Fahrzeugumfelds und zur Bestimmung einer möglichen Kollision mit einem im Fahrzeugumfeld detektierten Hindernis während eines Park- oder Rangiervorgangs unter Berücksichtigung der anhand des gegebenen Stellwinkels der Vorder- und Hinterräder ermittelbaren Trajektorie vorgesehen ist, und dass die Stelleinrichtung nur bei Erfassung einer möglichen Kollision derart zum Verstellen der Hinterräder ansteuerbar ist, dass eine Kollision vermieden wird.

Erfindungsgemäß wird ein Sicherheitssystem vorgeschlagen, das den Einsatz der lenkbaren Hinterräder auf jeden Fall dann vorsieht, wenn dies zur Vermeidung einer Kollision auch tatsächlich erforderlich ist. Ansonsten können die Hinterräder während des Park- oder Rangiervorgangs grundsätzlich starr bleiben, sie werden also nicht aktiv verstellt. Alternativ ist es denkbar, die Hinterräder auch während des Park- oder Rangiervorgangs aktiv zu lenken, um diesen Vorgang zu unterstützen, wobei bei Erfassung einer möglichen Kollision sofort der Steuermodus umgeschaltet wird und die Hinterräder so gelenkt werden, dass eine Kollision vermieden wird. Dies hat dann Priorität

Mittels einer geeigneten Umfelderfassungseinrichtung wird zumindest das seitliche Fahrzeugumfeld erfasst, gegebenenfalls auch das vor bzw. hinter dem Fahrzeug befindliche Fahrzeugumfeld. Hierüber stehen also Informationen über die Beschaffenheit des Fahrzeugumfelds zur Verfügung, anhand welcher die Erfassungseinrichtung ermitteln kann, ob in diesem Bereich ein potentielles Hindernis gegeben ist, das eine Kollisionsgefahr darstellt. Die Erfassungseinrichtung ist in der Lage, kontinuierlich anhand des gegebenen Stellwinkels der Vorder- und Hinterräder (bei unverstellten Hinterrädern haben diese einen Lenkwinkel von 0°) die Trajektorie der beginnenden oder bereits laufenden Fahrzeugbewegung zu ermitteln, also den Weg, den das Fahrzeug unter Zugrundelegung der gegebenen Radlenkwinkel fahren wird. Aus der Fahrzeugumfeldverfassung sind Raumdaten bezüglich eines potentiellen Hindernisses bekannt. Anhand der räumlichen Trajektorie und der räumlichen Hindernisdaten kann die Erfassungseinrichtung nun ermitteln, ob eine potentielle Kollision droht oder nicht. Diese Ermittlung erfolgt kontinuierlich, so dass jedwede Lenkwinkelveränderung der Vorderräder - und natürlich auch der Hinterräder, wenn diese im Rahmen des Park- oder Rangiervorgangs oder zur Vermeidung einer Kollision aktiv gelenkt werden - im Rahmen der kontinuierlichen Trajektorieermittlung und Kollisionsprüfung berücksichtigt wird.

Ergibt sich nun aus der Analyse, dass eine Kollision droht, so wird in die Fahrzeuglenkung aktiv eingegriffen, indem die Hinterräder über die Stelleinrichtung gelenkt werden, und zwar derart, dass eine Kollision vermieden wird. Würde sich beispielsweise bei einer Abbiege- oder Wendefahrt eine Kollision mit einer Säule oder Mauerkante oder dergleichen im Bereich des Innenradius des Fahrzeugs ergeben, wenn die Hinterräder z. B. nicht gelenkt werden, so wird dies erfasst und kann durch eine entsprechende gegensinnige Auslenkung der Hinterräder verglichen mit der Auslenkung der Vorderräder vermieden werden, nachdem dadurch der innere Wenderadius vergrößert und die Trajektorie geändert werden kann. In ähnlicher Weise kann beispielsweise beim Wegparken von einer Wand oder Mauer eingegriffen werden, bei dem ohne Lenkeingriff über die Hinterräder eine Kollision mit der Wand oder Mauer möglich ist, die durch entsprechende Hinterradverstellung vermieden werden kann.

Nachdem die Hinterradlenkung jedoch vorzugsweise nur dann aktiviert wird, wenn dies aus Sicherheitsgründen zur Vermeidung einer Kollision erforderlich ist, und ansonsten die Hinterradlenkung bei dieser Steuervariante während des Park- oder Rangiervorgangs grundsätzlich inaktiv ist, also die Achs- oder Radstelleinrichtung nicht angesteuert wird, behält das Fahrzeug auch beim Parken oder Rangieren grundsätzlich seine dem Fahrer gewohnten Eigenschaften bei, das heißt, das Fahrverhalten bleibt wie gewohnt. Ein Eingriff erfolgt bei dieser Steuervariante nur dann, wenn dies zur Unterstützung des Fahrers aus Sicherheitsgründen auch tatsächlich erforderlich ist. Alternativ kann, wie bereits beschrieben, eine aktive Hinterradlenkung auch während des Rangier- oder Parkvorgangs erfolgen, wobei bei Erfassung einer möglichen Kollision die Lenkung so gesteuert wird, dass die Kollision vermieden werden kann, unabhängig davon, wie zuvor die Hinterradlenkung gesteuert wurde.

Die grundsätzliche Aktivierung dieses Fahrerassistenzsystems kann auf unterschiedliche Weise erfolgen. Beispielsweise kann eine Taste vorgesehen sein, über die der Fahrer vor einem Park- oder Rangiervorgang das System aktiv zuschaltet, also die Fahrzeugumfelderfassung und Hindernisbestimmung sowie die mögliche aktive Hinterradlenkung selbst aktiviert, unabhängig davon, ob diese nun im Fortgang des Vorgangs tatsächlich gebraucht wird oder nicht. Eine weitere Möglichkeit wäre eine automatische Aktivierung dieses Gesamtsystems, beispielsweise in Abhängigkeit der Geschwindigkeit. Bei einem Parkoder Rangiervorgang ist die Geschwindigkeit grundsätzlich sehr niedrig, das heißt, dass dieses System umfassend die Erfassungseinrichtung und Steuerungseinrichtung etc. beispielsweise grundsätzlich innerhalb eines Geschwindigkeitsbereichs von 0 km/h - 20 km/h aktiviert ist, also eingreifen könnte, wenn dies erforderlich ist, bei größeren Geschwindigkeiten dagegen nicht. Auch eine automatische Aktivierung in Abhängigkeit der gewählten Fahrstufe oder des eingelegten Ganges ist möglich. Das heißt, dass das System automatisch aktiviert wird, wenn der Rückwärtsgang oder der erste Gang bei einem manuellen Schaltgetriebe eingelegt wird, oder wenn die Rückwärtsfahrstufe oder die Dauerfahrstufe und dort der erste Gang bei einem Automatikgetriebe angewählt wird. Die aufgezählten Möglichkeiten, das System zu aktivieren, sind jedoch nicht abschließend, auch andere Aktivierungsszenarien wären denkbar.

Wenngleich durch die bedarfsweise aktivierbare Hinterradlenkung eine Vielzahl möglicher Kollisionsfälle vermieden werden kann, ist es aber nicht möglich, jedwede Situation kollisionsfrei aufzulösen. Die Erfassungseinrichtung ermittelt kontinuierlich die Kollisionssituation, bestimmt also kontinuierlich auch bei Verstellung der Vorder- und Hinterräder die Trajektorie und das Kollisionspotential mit einem erfassten Hindernis. Ergibt sich hieraus, dass trotz aktivierter Stelleinrichtung und verstellter Hinterräder die Kollision nicht vermieden werden kann, so sieht eine vorteilhafte Weiterbildung vor, dass dann ein optisches und/oder akustisches und/oder haptisches Warnsignal an den Fahrer gegeben wird, um ihn vor der drohenden Kollision zu warnen, so dass er sofort anhalten und die Situation eingehend überprüfen und entsprechende Gegenmaßnahmen einleiten kann.

Die Einrichtung zur Erfassung des Fahrzeugumfelds umfasst zweckmäßigerweise einen oder mehrere seitlich gerichtete Sensoren, wie beispielsweise Lidar-, Radar- oder Ultraschallsensoren, anhand deren Signale die Hinderniserfassung erfolgt. Selbstverständlich können der Einrichtung auch noch weitere front- und/oder heckseitige Sensoren zugeordnet sein, um eine möglichst umfassende Umfelderfassung und Hindernisermittlung vornehmen zu können. Anhand der aufgenommenen Sensorsignale ist entweder eine unmittelbare Hinderniserfassung möglich, das heißt, die Signale werden unmittelbar ausgewertet. Denkbar ist es aber auch, eine Art "Umfeldkarte" zu erstellen und aus dieser dann die entsprechenden Hindernisdaten, so solche gegeben sind, zu ermitteln, wie dies beispielsweise in der nachveröffentlichten deutschen Patentanmeldung DE 10 2006 061 390 mit dem dort offenbarten Umfelderfassungssystem und Umfelderfassungsverfahren beschrieben ist, auf die hiermit ausdrücklich verwiesen wird.

Neben dem Kraftfahrzeug betrifft die Erfindung ferner ein Verfahren zur Unterstützung des Fahrers eines Kraftfahrzeugs während eines Einpark- oder Rangiervorgangs, wobei mittels einer Einrichtung zur Erfassung zumindest des seitlichen Umfelds während des Einpark- oder Rangiervorgangs kontinuierlich das seitliche Fahrzeugumfeld erfasst und kontinuierlich das Vorhandensein eines etwaigen Hindernisses und eine mögliche Kollision mit diesem unter Berücksichtigung der anhand des gegebenen Stellwinkels der Vorder- und Hinterräder ermittelbaren Trajektorie ermittelt wird, und bei Ermittlung einer möglichen Kollision ein Stellelement für die unabhängig von den Vorderrädern lenkbaren Hinterräder derart angesteuert wird, dass die Kollision vermieden wird. Die Umfeld-, Hindernis-, Trajektorie- und Kollisionsermittlung erfolgt also kontinuierlich anhand der laufend gegebenen Sensorsignale der eingesetzten Umfeldsensoren, die selbstverständlich eine entsprechende Auflösung und Reichweite besitzen, um die Situation quasi in Ist-Zeit erfassen und entsprechende Situationsänderungen sofort nachvollziehen und erkennen zu können. Hierzu wird selbstverständlich eine geeignete und hinreichend schnelle Recheneinrichtung bzw. Prozessoreinrichtung seitens der Erfassungseinrichtung eingesetzt.

Bei der Ermittlung einer Kollisionsmöglichkeit trotz Hinterradverstellung wird in Weiterbildung der Erfindung dem Fahrer ein optisches und/oder akustisches und/oder haptisches Warnsignal gegeben. Bevorzugt wird ein akustisches Warnsignal in Form eines Pieps- oder Pfeiftons über das fahrzeugseitige Lautsprechersystem gegeben, da der Fahrer dieses sofort wahrnimmt unabhängig davon, wohin er gerade sieht bzw. wo er seine Hände hat. Ein optisches Warnsignal, das bevorzugt unterstützend gegeben wird, kann beispielsweise über die fahrzeugseitige Anzeigeeinrichtung, üblicherweise ein größerflächiges LCD-Display, gegeben werden, während ein haptisches Warnsignal, das ebenfalls bevorzugt unterstützend gegeben wird, beispielsweise über eine Vibrationseinrichtung im Lenkrad gegeben werden kann.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Prinzipdarstellung eines erfindungsgemäßen Kraftfahrzeugs,
- Fig. 2: eine Prinzipdarstellung einer Fahrsituation mit Kollisionsmöglichkeit,
- Fig. 3: die Fahrsituation aus Fig. 2 mit vermiedener Kollisionsmöglichkeit infolge einer Hinterradlenkung, und
- Fig. 4: eine weitere Fahrsituation mit gegebener Kollisionsmöglichkeit, und
- Fig. 5: die Fahrsituation aus Fig. 4 mit vermiedener Kollision infolge der Hinterradlenkung.

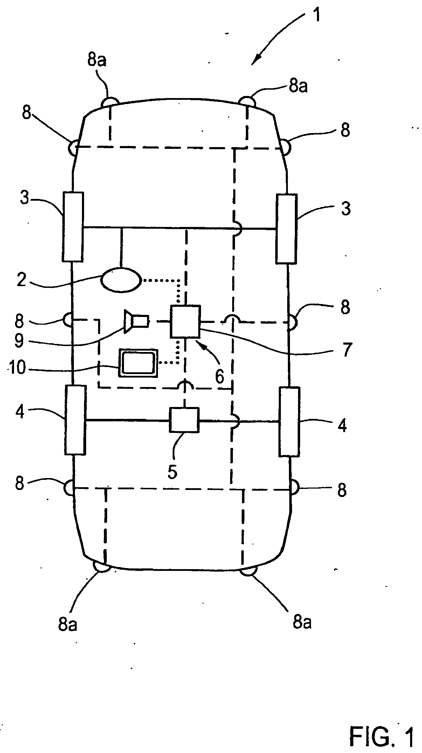

Fig. 1 zeigt ein erfindungsgemäßes Kraftfahrzeug 1 mit in bekannter Weise über ein Lenkrad 2 lenkbaren Vorderrädern 3 sowie zwei Hinterrädern 4, die über eine Stelleinrichtung 5, die auf die entsprechenden Lenkmechaniken der beiden Hinterräder 4, beispielsweise eine Achsschenkellenkung, wirkt, lenkbar sind. Der grundsätzliche Aufbau einer Hinterradlenkung, die ein Verstellen der Hinterräder um wenige Winkelgrad, beispielsweise in einem Intervall von ± 10°, ermöglicht, ist hinlänglich bekannt und muss nicht näher beschrieben werden.

Vorgesehen ist ferner eine Einrichtung 6, die der Erfassung des Fahrzeugumfelds, der Ermittlung etwaiger Hindernisse in diesem Fahrzeugumfeld, der Ermittlung der Fahrzeugtrajektorie sowie der Ansteuerung der Stelleinrichtung 5 für einen etwaigen Lenkeingriff dient. Die Einrichtung 6 umfasst eine Steuerungseinrichtung 7, die über geeignete Prozessoren verfügt, um die entsprechenden Aufgaben zu erfüllen. Die Steuerungseinrichtung 7 kommuniziert mit diversen, seitlich am Fahrzeug befindlichen Sensoren 8, bei denen es sich um Lidar-, Radar- oder Ultraschallsensoren, also Sensoren mit hinreichender Reichweite und räumlicher Auflösung, handelt. Diese erfassen kontinuierlich im Falle eines Park- oder Rangiervorgangs das seitliche Fahrzeugumfeld und etwaige dort befindliche Gegenstände, anhand welcher, worauf nachfolgend noch eingegangen wird, die Steuerungseinrichtung 7 eine potentielle Hindernis- und Kollisionsgefahr ermittelt. Die Steuerungseinrichtung 7 kann des Weiteren mit weiteren front- und heckseitig vorgesehenen Sensoren 8a kommunizieren, die weitere Umfelddaten liefern. Wie beschrieben werden sämtliche Sensorinformationen seitens der Steuerungseinrichtung 7 aufgenommen und dahingehend ausgewertet, ob sich Gegenstände in einem bestimmten Abstand zum Fahrzeug befinden. Die Umfelderfassung kann z.B. in einem Verfahren, wie es in der nachveröffentlichten deutschen Patentanmeldung DE 10 2006 061 390 beschrieben ist, seitens der Steuerungseinrichtung 7 erfolgen.

Um eine etwaige Kollisionsgefahr mit diesem ermitteln zu können, ist es erforderlich, die Trajektorie des Fahrzeugs in Abhängigkeit der gegebenen Radlenkwinkel zu ermitteln. Hierzu werden der Steuerungseinrichtung 7 ferner Informationen über die Lenkwinkel der Vorderräder während des Park- oder Rangiervorgangs gegeben, wie durch die gestrichelte Linie zwischen der Steuerungseinrichtung 7 und der Lenkachsverbindung der beiden Vorderräder 3 dargestellt ist. Beispielsweise beträgt der Hinterachslenkwinkel 0°, im Falle einer Kollisionsvermeidung werden auch die Hinterräder gelenkt, weshalb auch dort ein Lenkwinkel gegeben sein kann, der aber, nachdem über die Steuerungseinrichtung 7 die Stelleinrichtung 5 angesteuert wird, seitens der Steuerungseinrichtung 7 bereits bekannt ist. In jedem Fall wird nun anhand der gegebenen Lenkwinkel der Vorder- und Hinterräder 3, 4 die Trajektorie des Fahrzeugs während des Park- oder Rangiervorgangs ermittelt. Aus dieser zukünftigen Fahrspur bzw. deren räumlichen Daten bzw. den räumlichen Fahrzeugabmessungen und den räumlichen Hindernisdaten kann nun seitens der Steuerungseinrichtung 7 ermittelt werden, ob es bei einer Fortsetzung der Fahrt zu einer möglichen Kollision kommt oder nicht. Im Falle einer möglichen Kollision wird seitens der Steuerungseinrichtung 7 ermittelt, wie die Hinterräder 4 zu lenken wären, um die Kollision zu vermeiden. Das heißt, es wird eine alternative Trajektorie unter Verstellung der Hinterräder 4 ermittelt, die geeignet ist, die potentielle Kollision zu vermeiden. Ist eine solche Trajektorie gefunden, bzw. ist festgelegt worden, in welche Richtung die Hinterräder 4 grundsätzlich zu verstellen sind, steuert die Steuerungseinrichtung 7 die Stelleinrichtung 5 an, die dann gemäß dem vorgegebenen Verstellwinkel die Hinterräder 4 lenkt. Hierdurch ändert sich die Fahrspur, die Außen- und Innenradien verändern sich, dem Hindernis kann ausgewichen werden.

Für den Fall, dass sich entweder unmittelbar zu Beginn des Park- oder Rangiervorgangs oder während des Park- oder Rangiervorgans, auch gegebenenfalls nach erfolgter kollisionsvermeidender Hinterradverstellung, ergibt, dass die Kollision nicht vermieden werden kann, wird umgehend ein Warnsignal an den Fahrer gegeben, vorzugsweise in akustischer Form über einen Lautsprecher 9, gegebenenfalls kann zusätzlich auch eine optische Warnsignalgabe über eine Anzeigeeinrichtung 10 und/oder eine haptische Warnsignalgabe über das Lenkrad 2 gegeben werden, wobei diese Möglichkeiten bevorzugt subsidiär zur akustischen Warnsignalgabe sind und deshalb auch die entsprechenden Ansteuermöglichkeiten nur durch die gepunkteten Linien gezeigt sind.

Im beschriebenen Beispiel sei angenommen, dass während eines Park- oder Rangiervorgangs die Stelleinrichtung 5 grundsätzlich inaktiv ist, es erfolgt also keine Hinterradverstellung, damit das Fahrzeug während dieses Vorgangs seine üblichen, dem Fahrer bekannten Eigenschaften beibehält. Die Aktivierung der Stelleinrichtung 5, also die Ansteuerung über die Steuerungseinrichtung 7, erfolgt nur, wenn dies zur Kollisionsvermeidung erforderlich ist. Denkbar ist aber auch eine grundsätzliche aktive Unterstützung des Rangier- oder Parkvorgangs über die Hinterradlenkung. Die Erkennung, dass ein Park- oder Rangiervorgang vorliegt, also die grundsätzliche Aktivierung dieses Kollisionsvermeidungs-Fahrerassistenzsystems, kann auf unterschiedliche Weise erfolgen. Eine Möglichkeit wäre, dies über eine geeignete Taste im Fahrzeug vorzunehmen, die der Fahrer zu Beginn eines Park- oder Rangiervorgangs aktiv betätigen muss. Denkbar ist es aber auch, dies in Abhängigkeit des eingelegten Ganges (Rückwärtsgang oder erster Gang respektive Rückwärtsfahrstufe oder Dauerfahrstufe mit erstem Gang beim Automaten) vorzunehmen, oder geschwindigkeitsabhängig zu steuern.

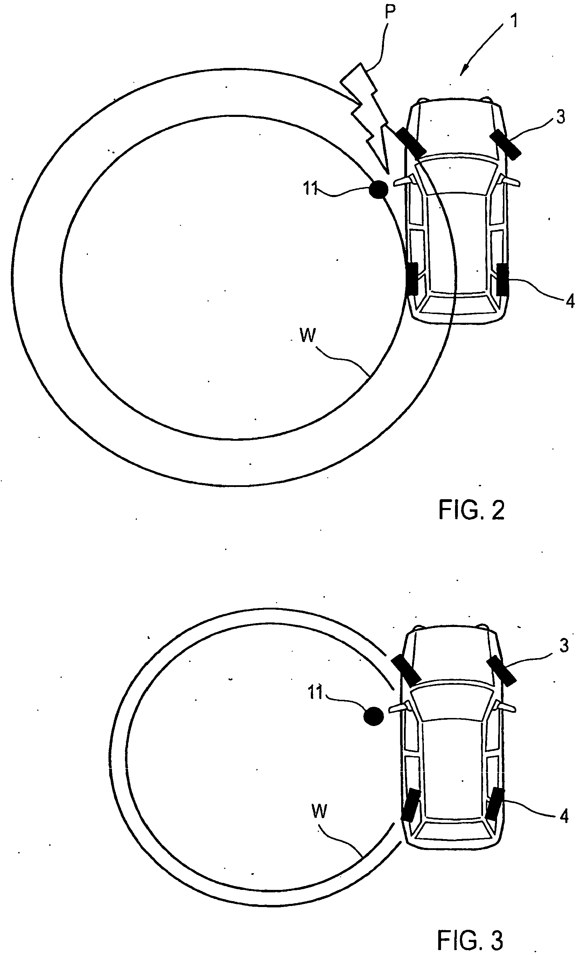

Die Figuren 2 und 3 zeigen eine potentielle kollisionsgefährdete Fahrsituation, wobei Fig. 2 die Kollisionsmöglichkeit zeigt und Fig. 3 die gleiche Fahrsituation mit aufgelöster Kollisionsmöglichkeit. Gezeigt ist das Kraftfahrzeug 1 und ein erfasstes Hindernis 11, beispielsweise eine Säule. In Fig. 2 sind nur die Vorderräder 3 verstellt, die Hinterräder 4 sind in der 0°-Position, also nicht gelenkt. Ersichtlich wird sich bei Fortsetzung der Fahrt infolge des engen inneren Wendekreises W eine Kollision mit dem Hindernis 11 ergeben, wie durch das Pfeilsymbol P dargestellt ist.

Fig. 3 zeigt, wie diese Kollision vermieden werden kann. Unmittelbar nach Erfassung einer potentiellen Kollisionsmöglichkeit wird über die Steuerungseinrichtung 7 die Stelleinrichtung 5 angesteuert, worüber die Hinterräder 4 verstellt werden. Hieraus resultiert, dass der innere Wenderadius W vergrößert wird, nachdem die Hinterräder entgegen der Einschlagrichtung der Vorderräder 3 verstellt sind (virtuelle Verkürzung des Radstandes). Dies führt dazu, dass das Fahrzeug auf einem größeren inneren Radius um das Hindernis 11 kollisionsfrei fahren kann. Sobald die Kollisionsgefahr ausgeräumt ist, was durch die Erfassungseinrichtung 6 kontinuierlich ermittelt wird, werden die Hinterräder 4 z. B. wieder in die 0°-Stellung gestellt und wieder inaktiv geschaltet, das heißt, die Stelleinrichtung 5, bei der es sich um einen hydraulischen oder elektrischen Steller handeln kann, wird nicht mehr angesteuert.

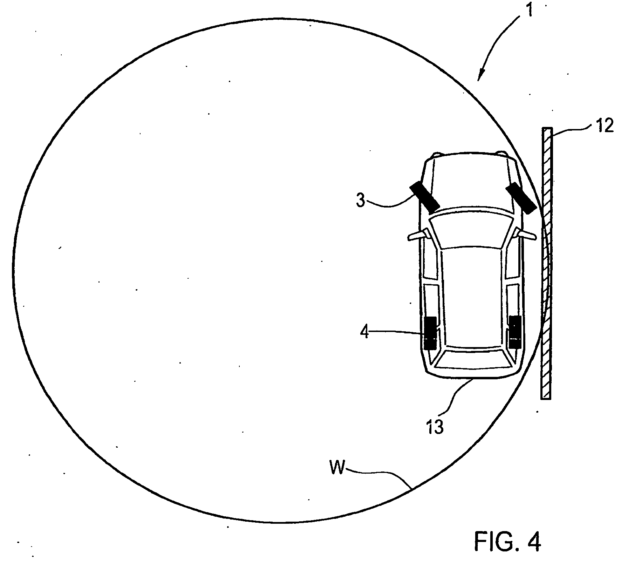

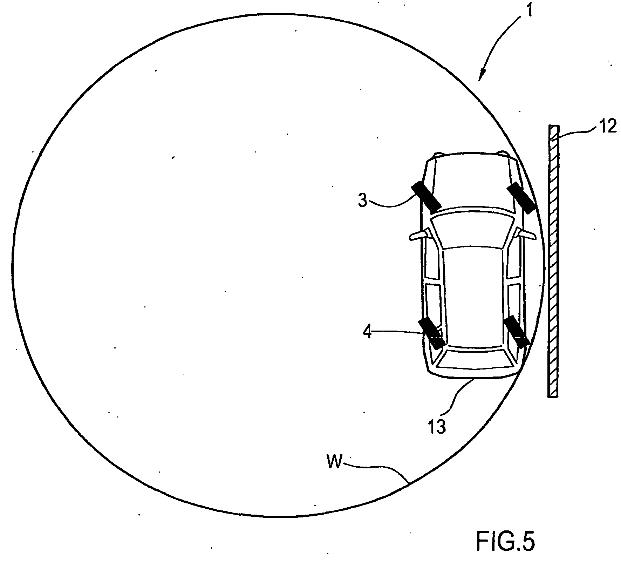

Fig. 4 zeigt eine andere Situation, bei der das Kraftfahrzeug 1 von einer Wand 12 weg parkt. Die Wand 12 stellt hier das Hindernis dar. Wie durch den Wenderadius W dargestellt ist, würde sich im Falle einer fehlenden Verstellung der geraden, also ungelenkten Hinterräder 4 eine Kollision des ausschwenkenden Fahrzeughecks 13 mit dem Hindernis 12 ergeben. Werden jedoch die Hinterräder 4 gleichsinnig zu den Vorderrädern 3 gelenkt, ist es auch hier möglich, kollisionsfrei von der Wand wegzufahren, wie in Fig. 5 gezeigt. Denn das Ausscheren des Fahrzeughecks wird hierdurch vermieden bzw. reduziert, so dass sich der äußere Wendekreis verringert und die Kollision vermieden wird.

## Patentansprüche

1. Kraftfahrzeug mit über eine Stelleinrichtung unabhängig von den Vorderrädern lenkbaren Hinterrädern und mit einer Einrichtung (6) zur Erfassung zumindest des seitlichen Fahrzeugumfelds **dadurch gekennzeichnet, dass**
diese Einrichtung (6) zur Bestimmung einer möglichen Kollision mit einem im Fahrzeugumfeld detektierten Hindernis während eines Parkoder Rangiervorgangs unter Berücksichtigung der anhand des gegebenen Stellwinkels der Vorder- und Hinterräder ermittelbaren Trajektorie vorgesehen ist, und dass die Stelleinrichtung nur bei Erfassung einer möglichen Kollision derart zum Verstellen der Hinterräder ansteuerbar ist, dass eine Kollision vermieden wird.

2. Kraftfahrzeug nach Anspruch 1,
**dadurch gekennzeichnet,**
**dass** bei Ermittlung einer durch eine Verstellen der Hinterräder nicht vermeidbaren Kollisionsmöglichkeit ein optisches und/oder akustisches und/oder haptisches Warnsignal an den Fahrer gebbar ist.

3. Kraftfahrzeug nach Anspruch 1 oder 2,
**dadurch gekennzeichnet,**
**dass** die Einrichtung zur Erfassung des Fahrzeugumfelds einen oder mehrere seitlich gerichtete Sensoren, insbesondere Lidar-, Radar- oder Ultraschallsensoren, umfasst, anhand deren Signale die Hinderniserfassung erfolgt.

4. Verfahren zur Unterstützung des Fahrers eines Kraftfahrzeugs während eines Einpark- oder Rangiervorgangs, wobei mittels einer Einrichtung
zur Erfassung zumindest des seitlichen Fahrzeugumfelds während des Einpark- oder Rangiervorgangs kontinuierlich das seitliche Fahrzeugumfeld erfasst und das Vorhandensein eines etwaigen Hindernisses und eine mögliche Kollision mit diesem unter Berücksichtigung der anhand des gegebenen Stellwinkels der Vorder- und Hinterräder ermittelbaren Trajektorie ermittelt wird, und bei Ermittlung einer möglichen Kollision ein Stellelement für die unabhängig von den Vorderrädern lenkbaren Hinterräder derart angesteuert wird, dass die Kollision vermieden wird.

5. Verfahren nach Anspruch 4,
**dadurch gekennzeichnet,**
**dass** bei Ermittlung einer möglichen Kollision trotz Hinterradverstellung dem Fahrer ein optisches und/oder akustisches und/oder haptisches Warnsignal gegeben wird.

## Claims

1. Motor vehicle with rear wheels steerable via a control device independently of the front wheels and with a device (6) for recording at least the lateral environs of the motor vehicle, **characterised in that**
this device (6) is envisaged for determining a possible collision with an obstacle detected in the vehicle environs during a parking or marshalling procedure taking in account the trajectory determinable by way of the control angle of the front and rear wheels, and that in the event of determining a possible collision the control device can only be operated to adjust the rear wheels in such a way that a collision is avoided.

2. Motor vehicle according to claim 1
**characterised in that**
in the event of determining a possible collision that cannot be prevented by adjusting the rear wheels an optical and/or acoustic and/or haptic warning signal can be given to the driver.

3. Motor vehicle according to claim 1 or 2
**characterised in that**
the device for recording the vehicle environs comprises one or more laterally directed sensors, more particularly lidar, radar or ultrasonic sensors, by way of the signals of which the obstacle is recorded.

4. Method of assisting the driver of a motor vehicle during a parking or marshalling procedure wherein by means of a device for recording at least the lateral environs of the vehicle during the parking or marshalling procedure, the lateral vehicle environs and the presence of any obstacles and a possible collision therewith taking into account the trajectory determinable by means of the adjusting angle of the front and rear wheels are recorded, and in the event of determining a possible collision a control element for the rear wheels, steerable independently from the front wheels, is operated in such a way that the collision is prevented.

5. Method according to claim 4
**characterised in that**
on determining a possible collision in spite of adjustment of the rear wheels, an optical and/or acoustic and/or haptic warning signal is given to the driver.

## Revendications

1. Véhicule automobile avec des roues arrière pouvant être orientées indépendamment des roues avant par l'intermédiaire d'un dispositif de positionnement et avec un dispositif (6) pour la détection d'au moins un environnement latéral de véhicule,
**caractérisé en ce que** ce dispositif (6) est prévu pour déterminer une collision possible avec un obstacle détecté dans l'environnement de véhicule pendant une opération de stationnement ou une manoeuvre en tenant compte de la trajectoire pouvant être déterminée à l'aide de l'angle de positionnement donné des roues avant et arrière et **en ce que** le dispositif de positionnement ne peut être commandé que lors de la détection d'une collision possible pour positionner les roues arrière de manière à éviter une collision.

2. Véhicule automobile selon la revendication 1, **caractérisé en ce que**, lors de la détermination d'une collision possible ne pouvant pas être évitée par un positionnement des roues arrière, un signal d'avertissement optique et/ou acoustique et/ou tactile peut être donné au conducteur.

3. Véhicule automobile selon l'une des revendications 1 ou 2, **caractérisé en ce que** le dispositif pour la détection de l'environnement de véhicule comprend un ou plusieurs capteurs orientés latéralement, notamment des capteurs lidars, radars ou à ultrasons, avec les signaux desquels s'effectue la détection d'obstacle.

4. Procédé d'assistance du conducteur d'un véhicule automobile pendant une opération de stationnement ou une manoeuvre, selon lequel on détecte l'environnement latéral de véhicule en continu pendant l'opération de stationnement ou la manoeuvre au moyen d'un dispositif pour la détection au moins de l'environnement latéral de véhicule, selon lequel on détermine la présence d'un éventuel obstacle et une collision possible avec celui-ci en tenant compte de la trajectoire pouvant être déterminée à l'aide de l'angle de positionnement des roues avant et arrière et selon lequel, lors de la détermination d'une collision possible, on commande de telle sorte un élément de positionnement pour les roues arrière pouvant être orientées indépendamment des roues avant que la collision est évitée.

5. Procédé selon la revendication 4, **caractérisé en ce que**, lors de la détermination d'une collision possible malgré le positionnement des roues arrière, on donne au conducteur un signal d'avertissement optique et/ou acoustique et/ou tactile.
